# EUROPÄISCHE PATENTANMELDUNG

(11) **EP 3 429 071 A1**
(43) Veröffentlichungstag der Anmeldung: **16.01.2019**
(21) Anmeldenummer: 17181217.5
(22) Anmeldetag: 13.07.2017
(51) Int. Cl.: H02K 11/225, H02K 41/03

(54) **ORTUNG EINES SEKUNDÄRTEILS BEIM EINSATZ IN EINEM LINEARMOTORBASIERTEN SYSTEM**

(71) Anmelder: Siemens Aktiengesellschaft, 80333 München (DE)
(72) Erfinder: Spindler, Carsten, 07368 Remptendorf (DE); Wedel, Bernd, 91096 Möhrendorf (DE)

(57) **Zusammenfassung**

Die Erfindung betrifft ein Verfahren zur Ortung eines Sekundärteils beim Einsatz in einem linearmotorbasierten System,
- wobei im linearmotorbasierten System mindestens ein Primärteil mit Primärteilspulen vorgesehen ist,
- wobei das Sekundärteil ein magnetisches Aktivteil zur Ausbildung eines Sekundärteilmagnetfeldes aufweist und die Primärteilspulen derart mit einem Antriebsstrom ansteuerbar sind, dass sich ein Primärteilmagnetfeld ausbildet, so dass ein Vorschub des Sekundärteils erreichbar ist,
- wobei an dem Sekundärteil mindestens eine Sekundärteilwicklung vorgesehen ist und ein Induzieren eines Sekundärstromes in der Sekundärteilwicklung in einer Testfrequenz eine Induktivitätsänderung einer in räumlicher Nähe zum Sekundärteil befindlichen Primärteilspule bewirkt(S3),
- wobei zur Ortung des Sekundärteils das mindestens eine Primärteil mit einem Primärstrom in der Testfrequenz bestromt wird zum Induzieren des Sekundärstromes und jeweilige Stromantworten der Primärteilspulen gemessen werden,
- wobei gemessene Stromänderungen der Stromantworten die Induktivitätsänderung der jeweiligen Primärteilspule anzeigen sowie eine relative Position eines Sekundärteils zu der jeweiligen Primärteilspule.

## Beschreibung

Die Erfindung betrifft ein Verfahren zur Ortung eines Sekundärteils beim Einsatz in einem linearmotorbasierten System sowie ein linearmotorbasiertes System.

Linearmotorbasierte Systeme werden im industriellen Umfeld eingesetzt, um beispielsweise Sekundärteile, welche auf einem Transportsystem beweglich angebracht sind, mit Hilfe von Linearmotortechnik gesteuert oder geregelt zu verfahren. Die Sekundärteile, manchmal auch Läufer genannt, können beispielsweise Komponenten oder Stückgut befördern, beispielsweise zwischen Verarbeitungsstationen in einer Fertigungsanlage oder innerhalb einer Verarbeitungsstation. Auch Werkzeugmaschinen oder sonstige Maschinen können als Antrieb Linearmotoren verwenden und dafür Sekundärteile aufweisen. Sekundärteile können ferner als Werkstückträger verwendet werden oder mit Werkstückträgern koppelbar sein, die Werkstücke in einer Anlage transportieren. Dabei werden die Sekundärteile beispielsweise als sog. Carrier entlang eines Primärteils mit Hilfe von im Primärteil vorgesehenen Wicklungen oder Spulen hochpräzise bewegt. Es sind aus dem Stand der Technik sog. Multi-Carrier-Systeme, kurz MCS, bekannt, bei welchen mehrere Carrier auf einem Langstator vorgesehen sind und unabhängig voneinander über eine entsprechende Ansteuerung der Spulen verfahren werden können.

Um die Carrier optimal aufeinander abstimmen zu können, um beispielsweise Kollisionen zu vermeiden oder um eine Abstimmung mit anderen Komponenten der Anlage, insbesondere weiterführenden Förderbändern oder Robotergreifarmen oder ähnlichem, zu ermöglichen, können Positionsgeber an einen Carrier angebracht werden. Dies ist mit einem relativ hohen technischen Aufwand am Primärteil verbunden. Es müssen Geber und entsprechende Verkabelung angebracht werden, sowie die Geberauswertung eingerichtet werden. Auch der Carrier muss spezifisch für das Positionsgebersystem der Anlage eingerichtet werden. Eine Zuordnung eines Gebers zu den Primärteilen erfordert einen relativen hohen softwaretechnischen Aufwand, da ein Carrier von mehreren Primärteilen betrieben wird. Die Carrier bewegen sich in MCS-Anwendungen oftmals über mehrere Primärteile, die als Segmente bezeichnet werden, hinweg.

Um diesen Aufwand zu vermeiden, werden Sekundärteile in linearmotorbasierten Systemen oftmals rein gesteuert betrieben. Dabei müssen Nachteile wie geringe Lagegenauigkeit oder geringe Geschwindigkeitsgenauigkeit in Kauf genommen werden sowie eine geringe mögliche Dynamik und somit niedrigere Geschwindigkeiten und Beschleunigungen.

Vor diesem Hintergrund besteht die Aufgabe der vorliegenden Erfindung darin, eine vereinfachte Ortung eines Sekundärteils beim Einsatz in einem Linearantrieb zu ermöglichen.

Die Erfindung betrifft ein Verfahren zur Ortung eines Sekundärteils beim Einsatz in einem linearmotorbasiertes System,
- wobei im linearmotorbasierten System mindestens ein Primärteil mit Primärteilspulen vorgesehen ist,
- wobei das Sekundärteil ein magnetisches Aktivteil zur Ausbildung eines Sekundärteilmagnetfeldes aufweist und die Primärteilspulen derart mit einem Antriebsstrom ansteuerbar sind, dass sich ein Primärteilmagnetfeld ausbildet, so dass ein Vorschub des Sekundärteils erreichbar ist,
- wobei an dem Sekundärteil mindestens eine Sekundärteilwicklung vorgesehen ist und ein Induzieren eines Sekundärstromes in der Sekundärteilwicklung in einer Testfrequenz eine Induktivitätsänderung einer in räumlicher Nähe zum Sekundärteil befindlichen Primärteilspule bewirkt,

- wobei zur Ortung des Sekundärteils das mindestens eine Primärteil mit einem Primärstrom in der Testfrequenz bestromt wird zum Induzieren des Sekundärstromes und jeweilige Stromantworten der Primärteilspulen gemessen werden,
- wobei gemessene Stromänderungen der Stromantworten die Induktivitätsänderung der jeweiligen Primärteilspule anzeigen sowie eine relative Position eines Sekundärteils zu der jeweiligen Primärteilspule.

Unter einem Primärteil werden in der vorliegenden Erfindung ein Aktivteil bzw. mehrere Aktivteile eines Linearmotors verstanden. Es kann sich um einen Langstator handeln, entlang dessen Sekundärteile bewegt werden und der selbst fest stehend verbaut ist. Durch ein individuelles Bestromen der Spulen wird entlang des Primärteils ein magnetisches Wanderfeld erzeugt, das Primärteilmagnetfeld, welches eine Bewegung des Sekundärteils entlang des Primärteils bewirkt. Das Sekundärteil weist ein magnetisches Aktivteil, beispielsweise einen Permanentmagneten, auf, welcher durch das magnetische Wanderfeld des Primärteils eine Vorschubkraft erfährt. Das durch das magnetische Aktivteil gebildete Sekundärteilmagnetfeld wechselwirkt dabei mit dem Primärteilmagnetfeld, sodass eine Vorschubkraft entsteht, welche den Vorschub des Sekundärteils bewirkt, beispielsweise in horizontaler Richtung entlang eines horizontal befestigten Langstators.

Unter einem Linearantrieb wird in der vorliegenden Anmeldung ein Antriebssystem verstanden, bei welchem Linearmotoren zum Antrieb genutzt werden. Unter dem Antriebsstrom wird derjenige Strom verstanden, mit dem die Primärteilspulen zur Erzeugung des Wandermagnetfeldes bestromt werden und der beispielsweise für die Bewegung der Carrier entlang des Stators verantwortlich ist. Es kann sich um einen Linearantrieb mit Einzelspultechnik mit entsprechendem Primärteil handeln oder um ein Dreiphasenstrom-basierten Antrieb mit aneinandergereihten Segmenten.

Bei einem sog. Multi-Carrier-System werden die Primärteilspulen eines Langstators mit Antriebsströmen derart belegt, dass mehrere Carrier unabhängig voneinander entlang des Stators bewegt werden können.

Ein Primärteil umfasst beispielsweise eine Vielzahl von Spulen, insbesondere bei einer dreiphasigen Bestromung ganzzahlige Vielfache von drei.

An einem Sekundärteil oder an mindestens einem Sekundärteil im Falle mehrerer Sekundärteile ist jeweils mindestens eine Sekundärteilwicklung vorgesehen. Die Sekundärteilwicklung ist vorteilhafterweise einphasig ausgestaltet. Die Sekundärteilwicklung ist vorteilhafterweise räumlich nahe an den Permanentmagneten des Sekundärteils angebracht, beispielsweise um einen Pol eines Magneten herum. Die Sekundärteilwicklung bewegt sich demnach gemeinsam mit dem Sekundärteil entlang des Primärteils. Sie ist vorgesehen zum Induzieren eines Sekundärstroms in einer Testfrequenz. Das bekannte Phänomen der Induktion eines Sekundärstromes ist in der Sekundärteilwicklung zu beobachten, sobald ein Primärstrom in einer räumlich nahegelegenen Spule ein veränderliches Magnetfeld in Richtung der Sekundärteilwicklungsachse bewirkt.

Zur Ortung des Sekundärteils wird vorgeschlagen, Primärteilpulen mit einem Primärstrom in einer gewählten Testfrequenz zu bestromen. Dies induziert einen Sekundärstrom in der Testfrequenz in der Sekundärteilwicklung. Der Sekundärstrom in der Sekundärteilwicklung bewirkt eine Induktivitätsänderung einer in räumlicher Nähe zum Sekundärteil befindlichen Primärteilspule. Diese Induktivitätsänderung wirkt sich auf eine Stromantwort der betroffenen Primärteilspule aus. Wird eine solche Stromänderung in der Stromantwort einer Primärteilspule gemessen, so kann dies auf die Induktivitätsänderung der jeweiligen Primärteilspule zurückgeführt werden und somit die räumliche Nähe eines Sekundärteils zu dieser Primärteilspule erkannt werden. Die Sekundärteilwicklung könnte auch als Ortungswicklung bezeichnet werden.

Das Bestromen mit der Testfrequenz erfolgt in einer definierten Richtung, die auf die Ausrichtung der Sekundärteilwicklung abgestimmt ist, so dass der Sekundärstrom induziert werden kann.

Das Verfahren ist auch auf linearmotorbasierte Systeme mit Einzelspultechnik oder ohne Segmente anwendbar. Das Primärteil weist dann insbesondere verschiedene Wicklungen auf, diejenigen, die zur Antriebsbestromung über das System hinweg benötigt werden und zugleich diejenigen, die zur Ortungsbestromung benötigt werden.

In einer Variante sind mehrere, insbesondere zwei oder vier Sekundärteilwicklungen je Sekundärteil vorgesehen. Bei einem Sekundärteil mit mehreren Polen ist beispielsweise je Pol eine Sekundärteilwicklung vorgesehen. Die mehreren Sekundärteilwicklungen können separate Wicklungen bilden. Ebenso kann eine einzige Sekundärteilwicklung über mehrere Pole verlaufen und mäanderförmig zu einer sogenannten Wellenwicklung verbunden sein.

Auf vorteilhafte Weise wird anhand der Überwachung der Ströme in den Primärteilspulen erkannt, ob eine Induktivitätsänderung in der jeweiligen Primärteilspule erkennbar ist. So kann auf das Vorliegen eines Sekundärstromes rückgeschlossen werden, welcher in einer räumlich nahegelegenen Wicklung vorliegen muss. Somit kann auf die Nähe eines Sekundärteils mit zugehöriger Sekundärteilwicklung geschlossen werden. Der Effekt der Auswirkung des Stromes in der Primärteilspule durch die Änderung eines Sekundärstroms in der Sekundärteilwicklung, welcher selbst durch die Beaufschlagung mit dem Primärstrom in der Testfrequenz in der Primärteilspule induziert wurde, ermöglicht das vorgeschlagene Verfahren zur Ortung des Sekundärteils ohne Positionsgeber auf vorteilhafte Weise.

Auf vorteilhafte Weise ist es möglich, mit Hilfe des vorgeschlagenen Testsignal-basierten Verfahrens eine geberlose Regelung von Synchronmotoren, insbesondere permanenterregten Synchronmotoren, geschalteten Reluktanzmotoren oder sogenannten Interior Permanent Magnet Synchronous Motoren zu realisieren.

Unter der Testfrequenz wird in der vorliegenden Anmeldung eine je nach gewähltem Aufbau oder Anwendungsfall oder je nach gewählten Komponenten vorgegebene oder vorgebbare Frequenz verstanden, welche speziell für die Ortungsbestromung verwendet wird. Je nach gewählter Beschaffenheit der Sekundärteilwicklung wird das Verhalten der Sekundärteilwicklung oder einer Schaltung, in welche die Sekundärteilwicklung integriert ist, angepasst. Beispielsweise wird durch den Umrichter eine verwendbare Frequenz vorgegeben, welche die Testsignalfrequenz bildet. Erfolgt das Bestromen mit der Testfrequenz, so erfolgt auch das Induzieren des Sekundärstromes in etwa in der Testfrequenz.

Gemäß einer Ausgestaltung ist eine Wicklungsachse der Sekundärteilwicklung zumindest anteilig, insbesondere vollständig, in einer durch das magnetische Aktivteil vorgegebenen d-Achse vorgesehen. In einer besonders vorteilhaften Ausgestaltung ist die Sekundärteilwicklung vollständig in Richtung der d-Achse oder Hauptflussrichtung des Sekundärteilmagnetfeldes vorgesehen. Die Sekundärteilwicklung ist dann insbesondere derart angeordnet, dass die Wicklung am durch die Permanentmagnete des Sekundärteils erzeugten Fluss teilnimmt. Die Permanentmagnete eines Sekundärteils bilden eine Hauptflussrichtung oder d-Richtung oder d-Achse aus, die durch die räumliche Anordnung des magnetischen Aktivteils im Sekundärteil vorgegeben ist. Die Sekundärteilwicklung ist derart angebracht, dass sie die Hauptflussrichtung feldverstärkend oder feldschwächend eingesetzt werden kann. Im besonders vorteilhaften Fall wird die Sekundärteilwicklung vollständig in d-Richtung angebracht und die Ortungsbestromung erfolgt ebenfalls neben der Antriebsbestromung in q-Richtung in die vorgegebene d-Richtung, so dass eine Störung der Vorschubkraft minimiert wird. Ein Wechselmagnetfeld mit Anteilen in der durch die Permanentmagnete vorgegebenen d-Richtung beeinflusst die Vorschubbewegung aufgrund der Antriebsströme und der für die vorschiebende Kraft benötigten Magnetfelder möglichst wenig.

Die Position der durch die Permanentmagente eines Sekundärteils oder Carriers vorgegebenen und durch die Sekundärteilwicklung verstärkten Flussachse wird genutzt zur Lagebestimmung des Carriers.

Gemäß einer Ausgestaltung wird zur Ortung das mindestens eine Primärteil mit einem Primärstrom bestromt, der zu einem Wechselmagnetfeld mit Anteilen, insbesondere vollständig, in Richtung einer Wicklungsachse der Sekundärteilwicklung führt. Zumindest zu einem gewissen Anteil sollte das Bestromen zu einem Wechselmagnetfeld in Richtung der Wicklungsachse der Sekundärteilwicklung führen. Je besser die Richtung des Wechselmagnetfeldes und die der Sekundärteilwicklung übereinstimmen, desto höher ist der induzierte Strom.

Dies wird vorteilhafterweise für die Ansteuerung der Primärteilspulen über einen separaten Stromregler für die d-Richtung gelöst. Vorteilhafterweise werden somit das Primärteilmagnetfeld, das sich durch den Antriebsstrom ausbildet, und das Sekundärteilmagnetfeld, das sich nach dem Primärteilmagnetfeld ausrichtet, möglichst wenig beeinflusst. Dadurch wird die Vorschubbewegung des Sekundärteils möglichst wenig beeinträchtigt. Die Antriebsströme und die Primärströme werden für eine Primärteilspule überlagert und gemeinsam angelegt. In einem besonders vorteilhaften Beispiel ist die Sekundärteilwicklung in d-Richtung ausgebildet und die Bestromung mit dem Primärstrom erfolgt ebenfalls vollständig in d-Richtung, d.h. es werden an die Primärteilspulen Primärströme derart angelegt, dass ein Wechselmagnetfeld lediglich in Richtung der Wicklungsachse der Sekundärteilwicklung führt. Dies maximiert einerseits die Auswirkung des Sekundärstroms auf die Induktivitätsänderung der Primärteilspule und minimiert zugleich die Beeinflussung des Primärteilmagnetfeldes durch das Wechselmagnetfeld des Primärstroms.

In einer Variante werden die Primärteilspulen mit einem Primärstrom mit der Testfrequenz > 1 kHz, insbesondere 2 kHz oder 4 kHz, bestromt. Je höher die Testsignalfrequenz ausfällt, umso höher ist die erzielbare "Geber-Frequenz" des aus dem Testsignal resultierenden Gebersignals. Je höher die Geber-Frequenz, umso höher die erzielbare Reglerdynamik, aber umso aufwändiger gleichzeitig die Realisierung des Testsignalverfahrens. Diese Testfrequenz wird durch den Umrichter vorgegeben und insbesondere mehrere in Frage kommende Statorspulen werden durch den Umrichter mit dieser Testfrequenz beaufschlagt um den erforderlichen Sekundärstrom in der Sekundärteilwicklung hervorzurufen, welcher die Induktivitätsänderung bewirken kann.

Gemäß einer Ausgestaltung werden die Primärteilspulen des mindestens einen Primärteils mit dem Primärstrom bestromt, in deren räumlicher Nähe ein Sekundärteil geschätzt wird. Das Bestromen der Primärteilspulen mit dem Primärstrom kann beispielsweise derart betrieben werden, dass durch Abschätzung in Frage kommende Primärteilspulen bestromt werden. Beispielsweise ist durch eine grobe Abschätzung vorhersehbar, in welchem Bereich von mehreren Segmenten sich ein Sekundärteil in etwa befindet. Alle diese in Frage kommenden Segmente werden mit dem Primärstrom in der Testfrequenz bestromt, sodass die restlichen Segmente und deren Primärspulen von der Ortung nicht betroffen sind.

Gemäß einer Ausgestaltung werden ausgewählte Primärteilspulen mit einem Primärstrom in einer Energieübertragungsfrequenz bestromt, der zu einem Wechselmagnetfeld führt, wobei durch das Wechselmagnetfeld eine Spannung in einer zu den ausgewählten Primärteilspulen in räumlicher Nähe befindlichen Sekundärteilwicklung induziert wird und die Spannung genutzt wird zur Energiebereitstellung an einen oder mehrere an das Sekundärteil der in räumlicher Nähe befindlichen Sekundärteilwicklung angeschlossene Verbraucher oder Energiespeicher.

Zusätzlich zu der Ortung mittels einer Bestromung mit einer Ortungsfrequenz erfolgt somit gleichzeitig oder im Wechsel eine Bestromung mit einer Energieübertragungsfrequenz. Die Ortungsfrequenz hat beispielsweise im Vergleich zur Energieübertragungsfrequenz eine relativ hohe Frequenz und ist beispielsweise auf eine Resonanzfrequenz eines Schwingkreises, in welchen die Sekundärteilwicklung integriert ist, abgestimmt.

Die Sekundärteilwicklung hat dann neben der Funktion als Ortungswicklung zusätzlich die Funktion als Energieübertragungswicklung. Die beiden Funktionen werden über unterschiedliche Frequenzen angesteuert, um disjunkt zu sein. Vorteilhafterweise kann eine Realisierung über einen Verbraucher mit kapazitivem Anteil erfolgen. Eine Schaltung, in der die Sekundärteilwicklung eingebaut ist, ist dann entsprechend für beide Funktionen ausgelegt.

Die Erfindung betrifft ferner ein linearmotorbasiertes System, aufweisend
- mindestens ein Primärteil mit Primärteilspulen;
- mindestens ein Sekundärteil mit magnetischem Aktivteil zur Ausbildung eines Sekundärteilmagnetfeldes, wobei das mindestens eine Primärteil derart mit einem Antriebsstrom ansteuerbar ist, dass sich ein Primärteilmagnetfeld ausbildet, so dass ein Vorschub des mindestens einen Sekundärteils entlang des mindestens einen Primärteils erreichbar ist,
- das Sekundärteil ferner aufweisend mindestens eine Sekundärteilwicklung, wobei ein Induzieren eines Sekundärstromes in der Sekundärteilwicklung in einer Testfrequenz eine Induktivitätsänderung einer in räumlicher Nähe zum Sekundärteil befindlichen Primärteilspule bewirkt,
- eine Steuereinheit zum Bestromen des mindestens einen Primärteils mit einem Primärstrom in der Testfrequenz zum Induzieren des Sekundärstromes,
- eine Messeinrichtung zum Messen jeweiliger Stromantworten der Primärteilspulen, wobei gemessene Stromänderungen der Stromantworten die Induktivitätsänderung der jeweiligen Primärteilspule anzeigen sowie eine relative Position des Sekundärteils zu der jeweiligen Primärteilspule.

Die Messung der Stromantworten erfolgt insbesondere durch einen Umrichter, der die jeweilige Primärteilspule ansteuert. Für eine Variante mit dreiphasigem Motor misst der Umrichter in zwei oder drei Phasen des anliegenden Stromes den Strom und erhält den d-Anteil nach Transformation aus dem u/ v/ w-Koordinatensystem über das Alpha/Beta-Koordinatensystem in das d/q-Koordinatensystem.

Gemäß einer Ausgestaltung ist die Sekundärteilwicklung zumindest anteilig, insbesondere vollständig, in einer durch das magnetische Aktivteil vorgegebenen d-Achse angeordnet.

Gemäß einer Ausgestaltung ist die Sekundärteilwicklung innerhalb des magnetischen Aktivteils eingebettet. Beispielsweise ist die Wicklung um den Permanentmagnet des Sekundärteils herum ausgebildet.

Gemäß einer Weiterbildung ist die Sekundärteilwicklung räumlich, insbesondere seitlich, versetzt zum magnetischen Aktivteil vorgesehen. Somit ist die Sekundärteilwicklung zwar innerhalb des Sekundärteils, jedoch ohne mechanische Abhängigkeit zwischen dem magnetischen Aktivteil des Sekundärteils, insbesondere einem Sekundärteilpermanentmagneten, und der Ortungswicklung realisiert. Die räumliche Versetzung ist in allen 3 räumlichen Dimensionen möglich, d.h. davor oder dahinter oder daneben oder oberhalb oder unterhalb der Permanentmagnete.

Gemäß einer Ausgestaltung ist die Steuereinheit zum Bestromen des mindestens einen Primärteils mit einem Primärstrom ausgestaltet, der zu einem Wechselmagnetfeld mit Anteilen, insbesondere vollständig, in Richtung einer Wicklungsachse der Sekundärteilwicklung führt.

In einer Variante ist die Steuereinheit zur Bestromung der Primärteilspulen mit einem Primärstrom mit der Testfrequenzgröße 1 kHz, insbesondere 2 kHz oder 4 kHz ausgebildet. Die Steuereinheit wirkt dafür insbesondere mit einer Umrichtersteuereinheit zusammen oder setzt sich aus Umrichtersteuereinheiten zusammen.

Gemäß einer Ausgestaltung ist die Sekundärteilwicklung zu einem Saugkreis oder Schwingkreis geschlossen oder kurzgeschlossen. Die Sekundärteilwicklung kann kurzgeschlossen werden. Alternativ kann die Sekundärteilwicklung in einen Schwingkreis oder Saugkreis integriert werden. Die Resonanzfrequenzen solcher Anordnungen werden dann auf die Testsignalfrequenz abgestimmt, damit ein besonders deutlicher Effekt der Induktivitätsänderung in der Primärteilspule erreicht werden kann.

Gemäß einer Ausgestaltung sind mehrere Sekundärteilwicklungen je Sekundärteil vorgesehen.

Gemäß einer Ausgestaltung sind eine oder mehrere Sekundärteilwicklungen um einen oder mehrere Pole des Sekundärteils herumgeführt.

Gemäß einer Ausgestaltung weist das linearmotorbasierte System mehrere aufeinanderfolgende Segmente auf. Insbesondere handelt es sich um Segmente, die jeweils durch Linearmotortechnik das Verfahren der Carrier auf dem Segment ermöglichen und zugleich durch Abstimmung der jeweiligen Umrichtersysteme eines Segmentes aufeinander einen Transfer der Carrier zwischen mehreren Segmenten oder über mehrere Segmente hinweg ermöglichen.

Vorteilhafterweise ist es mit Hilfe des vorliegenden Verfahrens und linearmotorbasierten Systems möglich, die Lage eines Carriers oder Sekundärteils auf einem linearmotorbasierten System mit Hilfe eines Testsignalverfahrens zu ermitteln. Dadurch kann der Motor feldorientiert betrieben werden. Der im Sekundärteil induzierte Strom wirkt bei einer Bestromung in d-Richtung und Ausrichtung der Sekundärteilwicklung in d-Richtung lediglich den Hauptfluss des Sekundärteils verstärkend oder abschwächend. Die d-Richtung ist für den Antrieb und die Vorwärtsbewegung meist ungenutzt und kann gemäß der vorliegenden Anmeldung für die Ortung genutzt werden. Es wird durch die Selbstinduktion idealerweise nur die Induktivität der Primärteilspulen in d-Richtung oder die d-Induktivität beeinflusst. Ein Sekundärteil kann vorteilhafterweise geregelt statt nur gesteuert werden. Dadurch ist eine deutlich höhere Genauigkeit und Dynamik erzielbar und Einflüsse durch Störkräfte oder Bearbeitungskräfte oder Rastkräfte werden weitgehend ausgeregelt.

Die Erfindung wird nachfolgend anhand eines Ausführungsbeispiels mit Hilfe einer Figur näher erläutert.

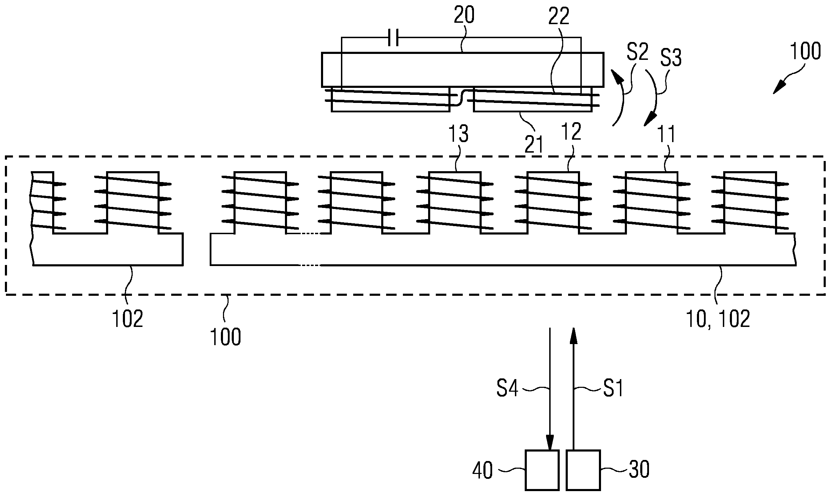

Figur 1 zeigt eine schematische Darstellung eines Ausschnittes eines linearmotorbasierten Systems 100 mit einem beispielhaften Sekundärteil 20 gemäß dem Ausführungsbeispiel der Erfindung. Das linearmotorbasierte System 100 weist ein Primärteil 10 mit Spulen oder Primärteilspulen 11, 12, 13... auf. Beispielsweise besteht das linearmotorbasierte System 100 aus mehreren Segmenten 101, 102 als Primärteile, welche mit Linearmotortechnik versehen sind und einen Langstator 200 bilden. Mittels der Linearmotoren werden die Primärteilspulen 11, 12,13 ... eines Primärteils 10 derart mit Strom belegt, dass ein Sekundärteil 20 mit einem magnetischen Aktivteil 21 entlang des Langstators 200 innerhalb eines Segments und über mehrere Segmente hinweg gesteuert bewegt werden kann. Dabei ist eine präzise Bewegung durch eine präzise Bestromung der einzelnen Spulen möglich. Es bildet sich ein Primärteilmagnetfeld durch das Bestromen der Primärteilspulen 11, 12,13 ... aus, welches dafür sorgt, dass ein durch das magnetische Aktivteil 21 um das Sekundärteil 20 bestehendes Sekundärteilmagnetfeld sich nach dem Primärteilmagnetfeld versucht auszurichten, wodurch eine Kraft entlang des Langstators 200 bewirkt wird. Diese auf das Sekundärteil 20 wirkende Kraft kann präzise eingestellt werden, sodass ein flexibles und für ein Sekundärteil 20 individuell vorgebbares Bewegungsmuster inklusive Beschleunigungs- und Stoppvorgängen erreichbar ist.

Die schematische Darstellung der Figur 1 zeigt beispielshalber ein solches Sekundärteil 20 auf einem Abschnitt oder Segment 101 als Primärteil 10. Weitere Segmente oder Abschnitte 102 sind angedeutet und in einem Realisierungsbeispiel in beliebiger Anzahl hintereinander vorsehbar. Ferner sind mehrere Sekundärteile, hier nicht abgebildet, realisierbar, welche jeweils auf einem Segment 101 sowie über die verschiedenen Segmente 101, 102 hinweg bewegt werden können. In Figur 1 ist ferner schematisch gezeigt, dass an dem Sekundärteil 20 eine Sekundärteilwicklung 22 vorgesehen ist, welche im beschriebenen Ausführungsbeispiel um das magnetische Aktivteil 21, beispielsweise einen Permanentmagneten, herum angeordnet ist. Die Wicklung ist mäanderförmig ausgebildet um beide gezeigten Pole gewickelt, weist einen Kondensator auf und bildet somit einen Schwingkreis.

Die Primärteilspulen 11, 12,13 ... sind derart mit einem Antriebsstrom ansteuerbar, dass das Sekundärteil 20 ein vorgegebenes Bewegungsmuster nachfährt. Zusätzlich zu diesem Antriebsstrom wird zur Ortung von Sekundärteilen des Systems ein Primärstrom durch den Umrichter ausgegeben. Beispielsweise werden die Primärteilspulen eines Segments mit dem Primärstrom beaufschlagt. Eine Steuereinheit 30 veranlasst das Bestromen S1 mit dem Primärstrom in einer Testfrequenz. Bei der Testfrequenz handelt es sich um eine geeignete Testfrequenz, welche durch den verwendeten Umrichter, welcher für die Bestromung der Primärteilspulen zuständig ist, vorgegeben wird. Die Sekundärteilwicklung 22 ist im gezeigten Ausführungsbeispiel in einen Schwingkreis eingebaut, dessen Resonanzfrequenz ausgerichtet ist auf die Testfrequenz. Durch das Bestromen S1 der Primärteilspulen mit dem Primärstrom in der Test- und Resonanzfrequenz wird in der Sekundärteilwicklung ein Strom in der Testfrequenz induziert. Da es sich dabei um die Resonanzfrequenz handelt, ist der Effekt der Induktion verstärkt. Das Induzieren S2 des Sekundärstromes im Schwingkreis des Sekundärteils bewirkt eine Induktivitätsänderung einer in räumlicher Nähe zum Sekundärteil 20 befindlichen Primärteilspule 12. Befinden sich mehrere Spulen in räumlicher Nähe, erfahren die mehreren Spulen die Induktivitätsänderung.

Mittels einer Messeinrichtung 40 werden die Stromantworten der Primärteilspulen, beispielsweise gerade der drei mit dem Primär-Ortungsstrom beaufschlagten Spulen, gemessen S4 und dadurch die Induktivitätsänderung einer Primärteilspule bemerkt. Die Induktivitätsänderung entsteht S3 durch eine nahe befindliche Sekundärteilwicklung mit induziertem Sekundärstrom. Liegt also oberhalb oder in direkter räumlicher Nähe zu einer Primärteilspule ein Sekundärteil 20, so wird dieser anhand der veränderten Stromantwort der jeweiligen Primärteilspule bemerkt. Die Sekundärteilwicklung ist im Ausführungsbeispiel in der d-Achse ausgerichtet. Es erfolgt die Bestromung mit der Testfrequenz ebenfalls in d-Richtung. Somit wird die relative Position einer durch die Sekundärteilwicklung verstärkten d-Achse eines Sekundärteils zu einer Primärteilspule ermittelt. Das Induzieren S2 des Sekundärstromes im Schwingkreis des Sekundärteils bewirkt eine Induktivitätsänderung der d-Achse in der dreiphasigen Primärwicklung 11, 12, 13 in räumlicher Nähe zum Sekundärteil 20.

Das Ausführungsbeispiel zeigt eine Sekundärteilwicklung 22, welche in Richtung der d-Achse am Ort der Pole orientiert ist Es sind auch Varianten mit einer horizontal oder zur Horizontalen schräg orientierten Sekundärteilwicklung entlang des Verlaufs der d-Achse in einem Bereich zwischen den Dauermagneten denkbar. Die Ortungsbestromung hat entsprechend mit dem dadurch vorgegebenen Drehstromwinkel der dreiphasigen Bestromung zu erfolgen, so dass der Fluss des Permanentmagneten an der Stelle der Wicklung beeinflusst wird.

Durch die Nummerierung der beschriebenen Verfahrensschritte soll keine bevorzugte zeitliche Reihenfolge gekennzeichnet werden. Vielmehr sollen durch die Nummerierung logische Zusammenhänge veranschaulicht werden. Die Schritte können zeitgleich oder zeitlich versetzt erfolgen und unterschiedlich lange anhalten. Insbesondere erfolgt die Bestromung mit der Resonanzfrequenz als Testfrequenz für den Primärstrom gleichmäßig und über alle Statorspulen 11, 12, ... hinweg verteilt. In einer Variante erfolgt nur ein Bestromen von relevanten Statorspulen, bei welchen ein Sekundärteil oder Läufer in der Nähe vermutet oder abgeschätzt wird. Ferner können mehrere Spulen zeitlich versetzt getestet werden. Ebenso erfolgt das Messen der Stromantworten beispielsweise dauerhaft oder zeitlich versetzt sowie ferner beispielsweise gleichmäßig bei allen Spulen oder spezifisch bei ausgewählten Primärteilspulen.

Mit dem beschriebenen Ausführungsbeispiel lässt sich ein geberloses Orten eines Sekundärteils, z.B. Carriers, in einem linearmotorbasierten System bewerkstelligen, welches entsprechend vorteilhaft den Einsatz von Carriern ohne zusätzliche Geber, Verkabelung und Geberauswerteeinrichtungen, die beispielsweise für eine sensorbasierte Lösung nötig wären, erfordert.

Besonders vorteilhaft funktioniert die vorgeschlagene Lösung für Fälle, in welchen ein deutlicher Unterschied in den Induktivitäten Ld und Lq vorhanden ist, d.h. wenn der induzierte Sekundärstrom, der in der in d-Richtung ausgerichteten Sekundärteilwicklung entsteht, eine deutliche Beeinflussung der Induktivität Ld der Primärteilwicklung bewirkt.

Vorteilhafterweise kann die Soll-Lage eines Sekundärteils, welches beispielsweise mit einem Werkstückträger versehen in einer Fertigungsanlage eingesetzt wird, nun geregelt werden. Gegenüber dem gesteuerten Betrieb erhöht sich dadurch die Genauigkeit und Dynamik und Einflüsse wie Stör- oder Bearbeitungskräfte oder Rastkräfte können weitgehend ausgeregelt werden.

Es ist auch möglich, das Ortungsverfahren als zweites Positionsmessverfahren zusätzlich zu einem herkömmlichen Positionsmessverfahren einzusetzen. Beispielsweise kann ein nichtsafety-fähiger Motorgeber bereits vorgesehen sein und durch das vorstehend beschriebene Ortungsverfahren wird kostengünstig ein safetyfähiges Gesamtsystem erzielt. Aufgrund der Safety-Fähigkeit des vorgestellten testsignalbasierten Ortungsverfahrens kann ein zertifizierbares safetyfähiges Gesamtsystem bereitgestellt werden.

## Patentansprüche

1. Verfahren zur Ortung eines Sekundärteils beim Einsatz in einem linearmotorbasierten System,
- wobei im linearmotorbasierten System mindestens ein Primärteil mit Primärteilspulen vorgesehen ist,
- wobei das Sekundärteil ein magnetisches Aktivteil zur Ausbildung eines Sekundärteilmagnetfeldes aufweist und die Primärteilspulen derart mit einem Antriebsstrom ansteuerbar sind, dass sich ein Primärteilmagnetfeld ausbildet, so dass ein Vorschub des Sekundärteils erreichbar ist,
- wobei an dem Sekundärteil mindestens eine Sekundärteilwicklung vorgesehen ist und ein Induzieren eines Sekundärstromes in der Sekundärteilwicklung in einer Testfrequenz eine Induktivitätsänderung einer in räumlicher Nähe zum Sekundärteil befindlichen Primärteilspule bewirkt(S3),
- wobei zur Ortung des Sekundärteils das mindestens eine Primärteil mit einem Primärstrom in der Testfrequenz bestromt wird (S1) zum Induzieren (S2) des Sekundärstromes und jeweilige Stromantworten der Primärteilspulen gemessen werden (S4),
- wobei gemessene Stromänderungen der Stromantworten die Induktivitätsänderung der jeweiligen Primärteilspule anzeigen sowie eine relative Position eines Sekundärteils zu der jeweiligen Primärteilspule.

2. Verfahren nach Anspruch 1, wobei eine Wicklungsachse der Sekundärteilwicklung zumindest anteilig, insbesondere vollständig, in einer durch das magnetische Aktivteil vorgegebenen d-Achse vorgesehen ist.

3. Verfahren nach Anspruch 1 oder 2, wobei zur Ortung das mindestens eine Primärteil mit einem Primärstrom bestromt wird, der zu einem Wechsel-Magnetfeld mit Anteilen, insbesondere vollständig, in Richtung einer Wicklungsachse der Sekundärteilwicklung führt.

4. Verfahren nach einem der vorstehenden Ansprüche, wobei Primärteilspulen des mindestens einen Primärteils mit dem Primärstrom bestromt werden, in deren räumlicher Nähe ein Sekundärteil geschätzt wird.

5. Verfahren nach einem der vorstehenden Ansprüche, wobei ausgewählte Primärteilspulen mit einem Primärstrom in einer Energieübertragungsfrequenz bestromt werden, der zu einem Wechselmagnetfeld führt und wobei durch das Wechselmagnetfeld eine Spannung in einer zu den ausgewählten Primärteilspulen in räumlicher Nähe befindlichen Sekundärteilwicklung induziert wird und die Spannung genutzt wird zur Energiebereitstellung an einen oder mehrere an das Sekundärteil der in räumlicher Nähe befindlichen Sekundärteilwicklung angeschlossene Verbraucher oder Energiespeicher.

6. Linearmotorbasiertes System (100), aufweisend
- mindestens ein Primärteil (10) mit Primärteilspulen (11, 12, 13...);
- mindestens ein Sekundärteil (20) mit magnetischem Aktivteil (21) zur Ausbildung eines Sekundärteilmagnetfeldes, wobei das mindestens eine Primärteil (10) derart mit einem Antriebsstrom ansteuerbar ist, dass sich ein Primärteilmagnetfeld ausbildet, so dass ein Vorschub des mindestens einen Sekundärteils (20) entlang des mindestens einen Primärteils (10) erreichbar ist,
- das Sekundärteil (20) ferner aufweisend mindestens eine Sekundärteilwicklung (22), wobei ein Induzieren eines Sekundärstromes in der Sekundärteilwicklung (22) in einer Testfrequenz eine Induktivitätsänderung einer in räumlicher Nähe zum Sekundärteil (20) befindlichen Primärteilspule (12) bewirkt,
- eine Steuereinheit (30) zum Bestromen des mindestens einen Primärteils (10) mit einem Primärstrom in der Testfrequenz zum Induzieren des Sekundärstromes,
- eine Messeinrichtung (40) zum Messen jeweiliger Stromantworten der Primärteilspulen (11, 12, 13...), wobei gemessene Stromänderungen der Stromantworten die Induktivitätsänderung der jeweiligen Primärteilspule (12) anzeigen sowie eine relative Position des Sekundärteils (20) zu der jeweiligen Primärteilspule (12).

7. Linearmotorbasiertes System (100) nach Anspruch 6, wobei die Sekundärteilwicklung (22) zumindest anteilig, insbesondere vollständig, in einer durch das magnetische Aktivteil vorgegebenen d-Achse angeordnet ist.

8. Linearmotorbasiertes System (100) nach Anspruch 7, wobei die Sekundärteilwicklung (22) innerhalb des magnetischen Aktivteils (21) eingebettet ist.

9. Linearmotorbasiertes System (100) nach Anspruch 7, wobei die Sekundärteilwicklung (22) räumlich, insbesondere seitlich, versetzt zum magnetischen Aktivteil (21) vorgesehen ist.

10. Linearmotorbasiertes System (100) nach einem der Ansprüche 6 bis 9, wobei die Steuereinheit (30) zum Bestromen des Primärteils (10) mit einem Primärstrom ausgestaltet ist, der zu einem Wechsel-Magnetfeld zumindest mit Anteilen, insbesondere vollständig, in Richtung einer Wicklungsachse der Sekundärteilwicklung (22) führt.

11. Linearmotorbasiertes System (100) nach einem der Ansprüche 6 bis 10, wobei die Sekundärteilwicklung (22) in einen Saugkreis oder Schwingkreis integriert ist oder kurzgeschlossen ist.

12. Linearmotorbasiertes System (100) nach einem der Ansprüche 6 bis 11, wobei mehrere Sekundärteilwicklungen je Sekundärteil vorgesehen sind.

13. Linearmotorbasiertes System (100) nach einem der Ansprüche 6 bis 12, wobei eine oder mehrere Sekundärteilwicklungen um einen oder mehrere Pole des Sekundärteils herumgeführt sind.

14. Linearmotorbasiertes System (100) nach einem der Ansprüche 6 bis 13, aufweisend mehrere aufeinanderfolgende Segmente (101, 102,...).
